# EUROPEAN PATENT SPECIFICATION

(11) **EP 2 794 163 B1**
(45) Date of publication and mention of the grant of the patent: **06.04.2016**
(21) Application number: 12824821.8
(22) Date of filing: 19.12.2012
(51) Int. Cl.: B23D 57/00

(54) **WIRE-GUIDING ROLLER OR DRUM TO GUIDE DIAMOND WIRES IN MULTI-WIRE MACHINE FOR CUTTING BLOCKS OF NATURAL OR ARTIFICIAL STONE**
DRAHTFÜHRUNGSWALZE -ODER TROMMEL ZUR FÜHRUNG VON DIAMANTDRÄHTEN IN MULTIDRAHTMASCHINEN ZUM SCHNEIDEN VON BLÖCKEN AUS NATÜRLICHEM ODER KÜNSTLICHEM STEIN
ROULEAU OU TAMBOUR DE GUIDAGE DE FIL POUR GUIDER DES FILS DIAMANTÉS DANS DES MACHINES MULTI-FILS POUR LA DÉCOUPE DE BLOCS DE PIERRE NATURELLE OU ARTIFICIELLE

(30) Priority: 23.12.2011 IT MO20110027
(43) Date of publication of application: 29.10.2014
(73) Proprietor: Pedrini SpA ad Unico Socio, 24060 Carobbio degli Angeli (BG) (IT)
(72) Inventor: PEDRINI Luigi, I-24060 Carobbio degli Angeli(BG) (IT)
(74) Representative: Gasparini, Alberto
(86) International application number: PCT/IT2012/000387
(87) International publication number: WO 2013/093948

(56) References cited:
- EP-A1- 1 598 162
- WO-A1-2010/146434
- WO-A1-2011/033542

## Description

### Field of the invention

This invention relates to a wire-guiding roller or drum for diamond wires in multi-wire machines for cutting blocks of natural or artificial stone, namely rollers or drums that guide the rings of diamond wires for the cutting of the above-mentioned blocks of stone, used in multi-wire machines, with more than a diamond wire ring that rests on the drum or roller.

### Prior art

The guiding rollers or drums, for rings of diamond wires, are provided with coatings of soft material with the aim of limiting the wear effect in the guiding grooves of the wires and protect them from the high abrasiveness of the diamond inserts with which the wire is provided.

The prior art comprises, in the multi-wire machines that use diamond wire rings on rollers or drums, grooves of soft material for housing the single diamond wire to limit wear therein. In the guiding rollers or drums, grooves with said soft material are necessary in order to reduce the wear contact between the diamond wire and the groove in which it is engaged. In the rollers or drums, moreover, considering the - even though - small difference of speed among the single diamond wires closed in a ring, due to the different length that cannot be eliminated among the single rings, wear originates due to the sliding of the wire in the respective groove with respect to the wires in the other grooves, the roller or drum thus wears out only in some of the grooves, namely those occupied by the wires at different speed with respect to the peripheral speed of the roller or drum that, being a single body, must have one single rotational speed. The wear of the groove, therefore, is an average between the possible wears and, due to the way of cutting the diamond wire rings, it is distributed according to the slight difference of speed among the wires.

The diamond wire consists of a multi-strand steel cable on which, at a preset distance, are anchored the inserts of diamond material having a greater diameter. The section of the wire, therefore, is not constant in the winding of the wire in the grooves, that is to say, it presents an irregular contact, the inserts and the wire portion between them against the surface of the groove being not able to be simultaneously in contact. To get round the sliding between the wires, in the prior art, grooves on pulleys were adopted on which only one wire at a time rests, while in the drums or rollers, the contiguous grooves coated in soft material wear out if the wires, which rest therein, have a different development of the ring in such a way as to have differences of tangential speed in the grooves of the roller. As said, during cutting the wires of the contiguous rings are placed to cut zones in the block of natural stone that can be of different hardness. The tense stress of the wires occurs in zones, linked to the difficulty found in cutting, so it happens that contiguous wires stretch out for the cutting stress in a non-different way, creating slight differences of speed that become significant only among very far wires.

The rollers or drums are generally made covering a cylindrical surface with a coating of soft material that, for the correct hardening, is cured in situ, namely to constitute a coating rigidly connected to the roller or drum of suitable hardness. After the use, the soft material of the grooves, although hardened, wears out little by little, in such a way as to prevent the correct guiding of the wires that rest on it and it is necessary to replace it, as said above, so after the removal for the mechanical processing of the coating and its replacement it is necessary to cure the new coating.

Solutions have been proposed that present an assembly of rings of soft coating material, to constitute the same grooves, on a cylindrical surface of the roller or drum internal to the grooves: the rings being able to slide with respect to each other on said cylindrical surface, in such a way as to compensate for the different speeds of the wires with diamond inserts that occur among them. Moreover, it has been verified that the expected sliding of the rings, of suitably hardened soft material, with respect to each other and on the cylindrical surface actually does not occur, that is to say, the roller or drum acts as a single block of material wound on the cylindrical surface and the wires that have a different speed slide in the grooves producing abrasion.

Maintenance must be carried out even if few grooves of the roller or drum have worn out: in fact this causes further sliding among the diamond wires with a different instantaneous length and therefore speed. Moreover, the curing of a new coating with grooves is not very easy to make, having to operate on the complete roller or drum. If, as often happens, the machine is not close to the workshop, for the necessary precision mechanical processing, and/or to the workshop for curing, the transport costs of the roller or drum may deeply affect the replacement and restoration of said soft coating material.

In the specific technique of drums for multiple wires for cutting stones the Italian patent application TO2006A000257 is known, which describes a drum for multi-wire machines for cutting blocks of stone with diamond wires, on whose cylindrical surface coaxial rings of polyurethane material are placed, fitted on said drum and tightened together, in such a way as to form an external surface with grooves for guiding and supporting the diamond wires: each ring is replaceable individually after disassembling the previous rings between it and the end of the drum. Each ring is provided with several grooves on the external surface and is tightened on the cylindrical surface of the drum for interference, thus avoiding the curing operation during the replacement of one of the rings with grooves that are damaged by use.

This solution, even if less expensive than the complete curing of the coating of material of contact with the diamond wires, is still little practical in the replacement of the rings with damaged grooves, having to take off the rings contiguous and external to the one to be replaced to replace the damaged internal one, with a consequent considerable work increase.

In the prior art is also known the patent application EP 2123384 A1 in which the anchorage of wear-resistant annular elements provided with one or three grooves is made on discs of pulleys, each rotating independently in order to support a single diamond wire, which engages on the single groove or in one of the three grooves present in the external cylindrical surface of the pulley disc. The radial fastening of the wear-resistant annular element is ensured by the curing on the disc.

This embodiment, even if object of realization on driving rollers or drums and not only wire guiding has limited applicability if to replace the coatings of the more central pulleys it is necessary to disassemble the preceding pulley discs, from the side of the roller or drum, up to the pulley disc to be replaced in its wear-resistant annular element. Notoriously these kinds of machines also have from 30 to 80 diamond wires closed in a ring that simultaneously cut a block of stone into slabs.

Finally, the solutions proposed in the prior art are little practical in their application and maintenance and also expensive having to make, as taught in the latter document, as many adjacent pulleys, even if joined in one single roll or drum, as are the contiguous diamond wires, which as said are many dozens. Therefore, because of the difficulty of replacement, the cost of maintenance is not adequately reduced for the guiding rollers of the diamond wires, which are notoriously the most worn-out in the grooves of the soft material due to their proximity to the block of stone being processed.

This background art is susceptible of further improvements with regard to the possibility of realizing a roller or drum for guiding wires with diamond inserts closed in a ring, for cutting machines of blocks of natural or artificial stone, which overcomes the above-mentioned drawbacks particularly in making its maintenance simple and fast.

Therefore, the technical problem that is at the basis of the present utility model is to realize a roller or drum that allows to compensate in an economically convenient way, in the supporting and/or guiding member of the diamond wires, for the different speeds of sliding among the wires and at the same time is economical to realize, easy to assemble, and, moreover, with such a shape as to facilitate the replacement of the soft coating material during maintenance with a very low production and maintenance cost. WO 2011/033542 A1 discloses a wire-guiding roller or drum according to the preamble of claim 1.

### Summary of the invention

This technical problem is solved, according to claim 1, by a wire-guiding roller or drum for guiding the diamond wires in multi-wire machines for cutting natural or artificial stone in blocks, comprising: rotating supporting members of the roller or drum on a supporting pin; a coating of cured soft material provided with grooves for housing and guiding diamond wires closed in a ring and contiguous; and it is characterised in that the roller or drum is divided into at least two roller or drum sections to constitute at least two roller or drum portions, for guiding a number of contiguous diamond wires in a number greater than for two each roller or drum portion; correspondingly each section has with the respective roller or drum portion a respective hub provided with rotating supporting members, associated to the supporting pin of the roller or drum of the multi-wire machine, with a rapidly detachable coupling between said hub and said roller or drum portion; the soft coating material being made up of a coating strip, of soft material and with housing grooves of the diamond wire rings, which is held in the correct position by a locking element of the two contiguous ends in the circumferential development of the coating strip.

In an additional and advantageous embodiment the strip of soft material has lips in the ends clamped by the locking element.

Moreover, in a further improved embodiment, the locking element is provided with a coating of soft material with grooves for housing the wires with diamond inserts.

Furthermore, in a specific embodiment the coating strip is provided with central and peripheral protuberances, in their turn the central ones being provided with internal axial teeth and the peripheral ones with external axial teeth that are housed in corresponding central and peripheral grooves, with corresponding undercuts, present in the external cylindrical surface of the roller portion.

Finally, in a specific and preferred embodiment the detachable coupling, between a disc and a corresponding rotating hub, comprises radial protuberances between radial openings in the disc; the protuberances are provided with holes for screws of connection of the protuberances with radial teeth present on said rotating hub; the clamping occurs on the abutment surface and the centering of the disc, that is to say, of the roller portion, on the centering surface of said protuberances.

Further characteristics and advantages of the present invention, in the realization of a roller or drum for guiding diamond wires in multi-wire machines for cutting natural or artificial stone in blocks, will appear from the description, made in the following, of an embodiment given as an indicative and not limitative example with reference to the seven drawing tables enclosed.

### Short description of the drawings

Figure 1 shows a schematic perspective view of a roller or drum section, according to the present invention, dismantled in a rapid and economical way by the rotating hub that, in the maintenance remains associated to the supporting pin of the roller or drum;
- Figure 2 shows a schematic side view of the roller or drum section of Figure 1;
- Figure 3 shows a schematic perspective view of the roller or drum portion of the section without the coating strip of soft material, in which one can see the anchorage position of its locking element;
- Figure 4 shows a schematic perspective view of the coating strip of soft material with a shape identical to the assembly position on the roller or drum portion;

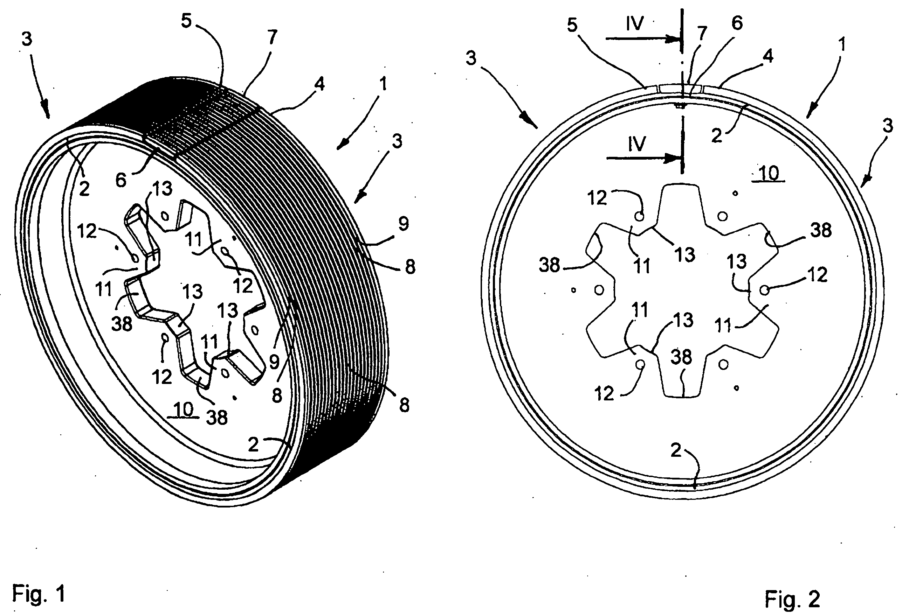

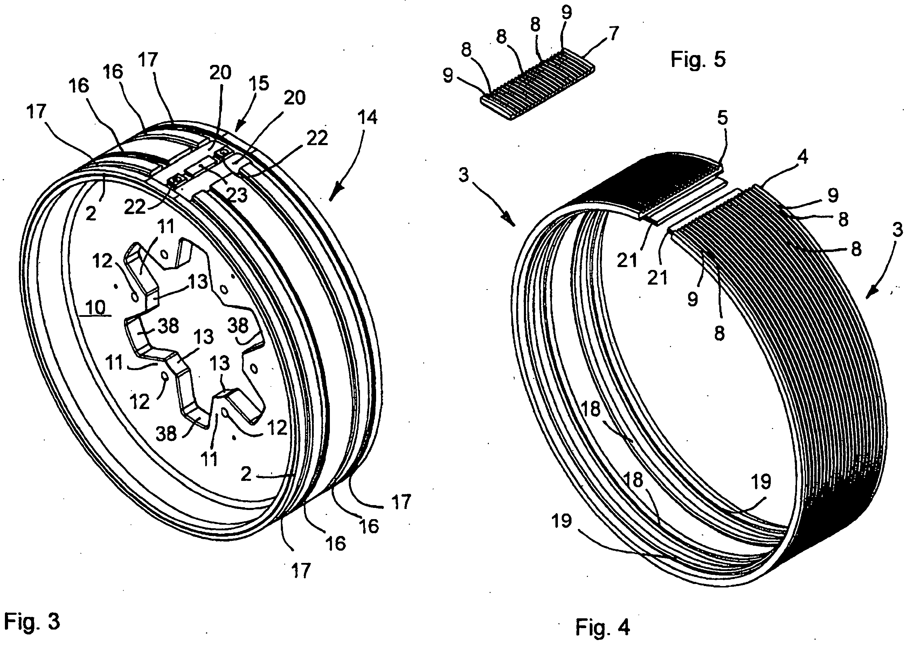

- Figure 1, 3 e 4 precedenti; Figure 5 shows a schematic perspective view of the corresponding coating portion of soft material fastened to the locking element; the view is in the same perspective as Figures 1, 3 and 4;

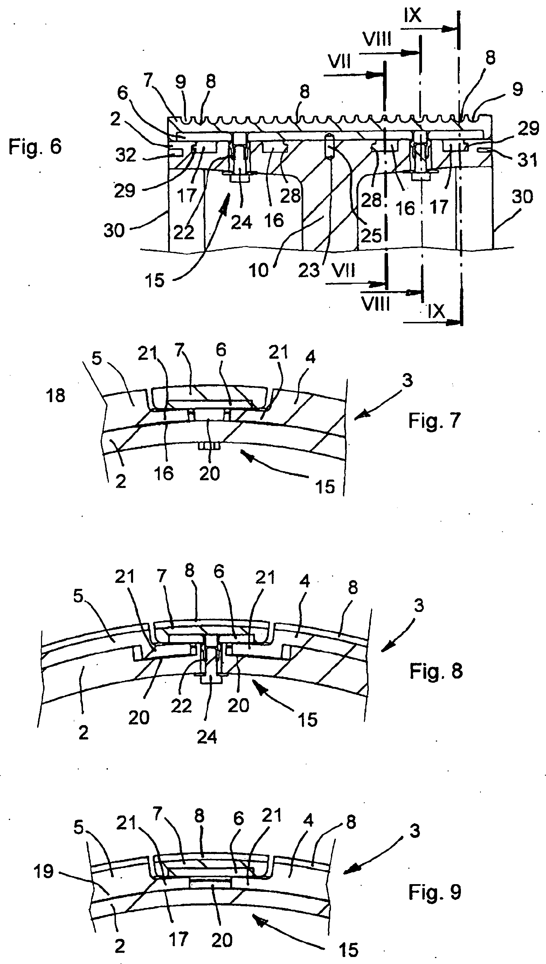

- Figure 6 shows a limited schematic section of the anchorage position of the coated locking element mounted in it; indicated by VI-VI in Figure 2;
- Figure 7 shows a limited schematic section VII-VII of Figure 6;
- Figure 8 shows a limited schematic section VIII-VIII of Figure 6;
- Figure 9 shows a limited schematic section IX-IX of Figure 6;

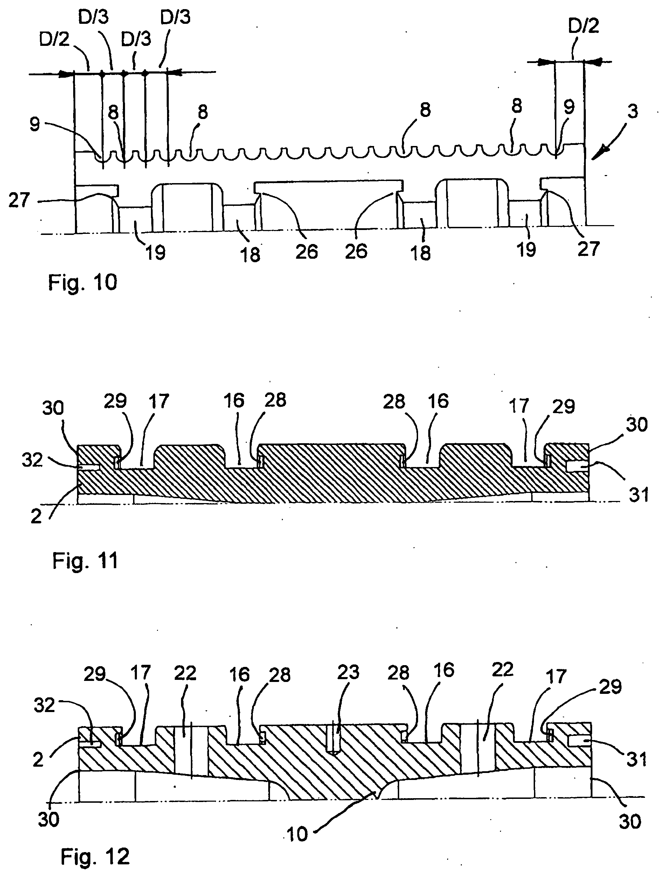

- Figure 10 shows a schematic section parallel to the rotation axis of the coating strip of soft material of the roller or drum portion of one of its sections;
- Figure 11 shows a schematic section parallel to the rotation axis, and limited to its external thickness, of the roller or drum portion of a section;
- Figure 12 shows a schematic section parallel to the rotation axis, and limited to its external thickness, of the roller or drum portion of a section made in correspondence of the anchorage point of the locking element of the coating strip of soft material;

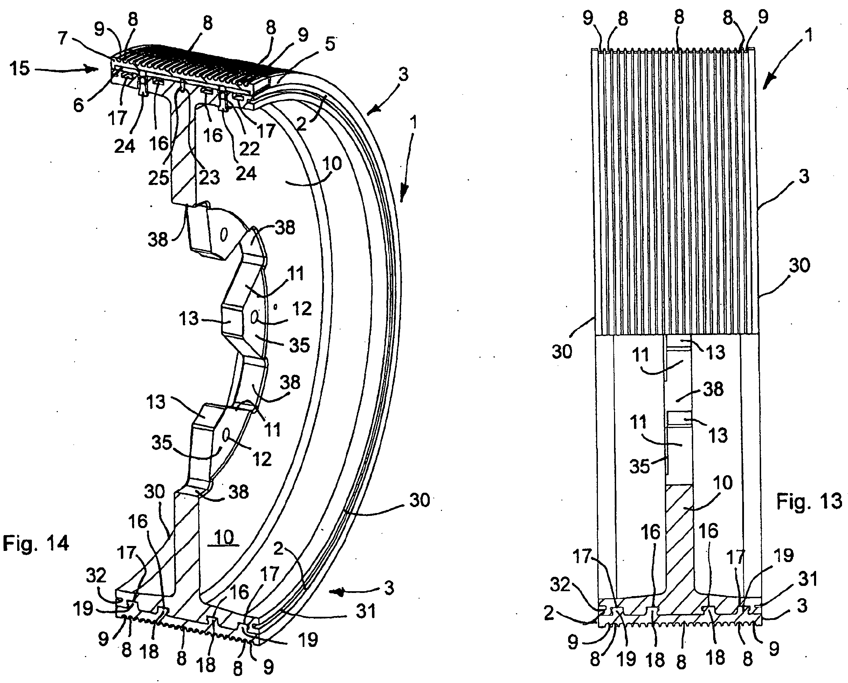

- Figure 13 shows a schematic view in a radial direction and in semi-section;
- Figure 14 shows a perspective view of a diametral section of the roller or drum portion, made in correspondence of the anchorage point of the locking element of the ends of the coating strip with grooves of soft material;

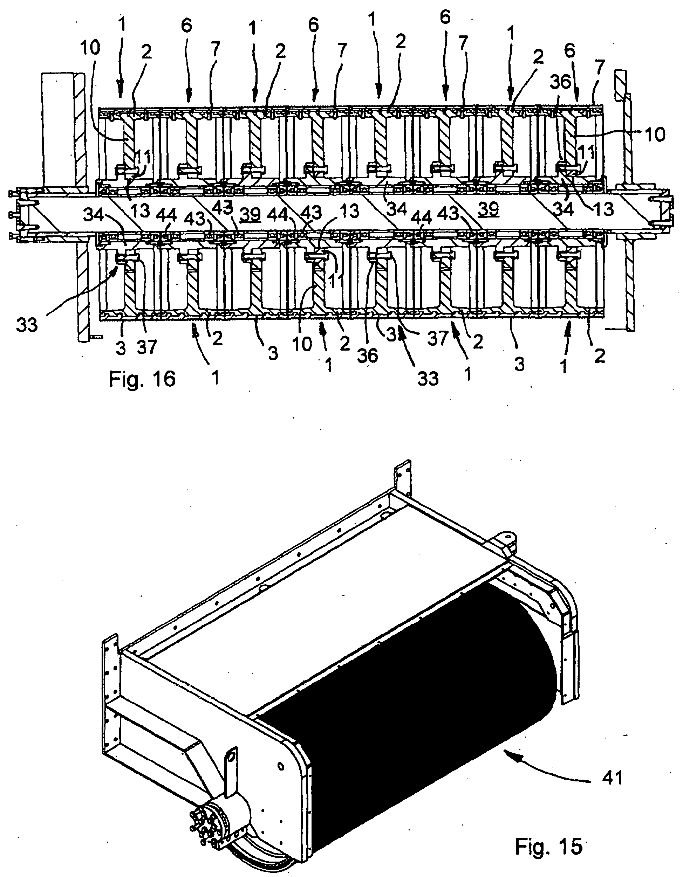

- Figure 15 shows a schematic perspective view of a wire-guiding roller or drum supported at both ends on the structure of the machine on which it is mounted;
- Figure 16 shows a schematic axial section of the roller of Figure 15;

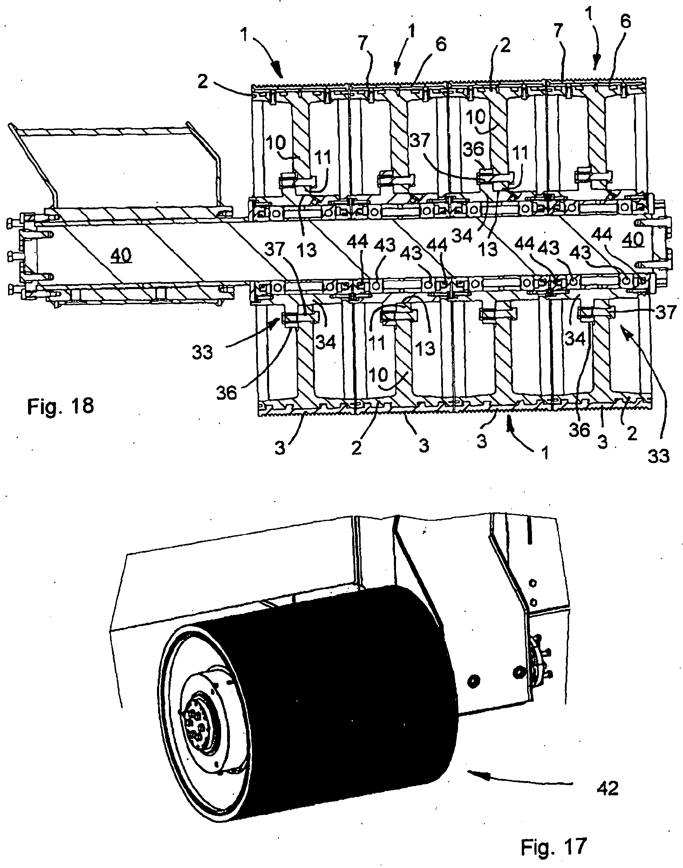

- Figure 17 shows a schematic perspective view of a wire-guiding roller or drum supported in an overhanging way at a single end on the structure of the machine on which it is mounted;
- finally, Figure 18 represents a schematic axial section of the roller of Figure 17.

### Detailed description of a preferred embodiment

In Figure 1, reference 1 indicates a roller or drum section or portion of a wire-guiding roller section on whose external cylindrical surface 2 a coating strip 3 of soft material is housed whose ends 4 and 5 are opposite and held in position with a locking element 6 fastened to said cylindrical surface in a removable way and in its turn coated in a soft material 7 similar to that of the strip and aligned with it. Said soft material of the strip 3 and of coating 7 of the locking element 6 has on its external surface intermediate 8 and end grooves 9 suitable to house a diamond wire for use in the cutting of stone blocks into slabs. A disc of connection 10 between the external cylindrical surface 2 of the roller or drum portion has a keying with protuberances 11 on which holes 12 are made for fastening to corresponding protuberances of the rotating hub, not shown in this Figure. The centering occurs on the surface 13 of each protuberance 11 on a processed diameter of coupling of the rotating hub.

In Figures 3 and 4, moreover, one can see the roller or drum portion 14 without the coating strip of soft material; the position 15 for housing the element 6 on said portion 14; central 16 and peripheral grooves 17, on the cylindrical surface 2 of the portion 14, to house internal, central 18 and peripheral housing protuberances 19, of the strip 3 of soft material. Moreover, one can see the depressions 20 for housing the lips 21 of the ends 4 and 5 of said strip 3. The position 15 also includes holes 22 for fastening the locking element 6 and a hole 23 for a precise axial reference of said locking element 6 with the external cylindrical surface 2 on which the strip is housed.

Figure 6 shows screw means 24 for fastening the locking element 6 and a reference pin 25 housed in the hole 23 and in a corresponding hole in the locking element 6. The coating 7 of soft material is applied by gluing to the locking element 6. The distance between centres between the intermediate grooves 8 and between the last of them and the end groove 9 is equal to D/3, while the distance between the external edge 30 of the roller or drum portion 1 and the centre line of the end groove 9 is equal to D/2, D being the distance at which the diamond wires are placed for cutting from a block of stone a slab having a minimum thickness provided for the multi-wire cutting machine on which the wire-guiding rollers or drums of the present invention are mounted.

In Figure 10 the internal protuberances of the strip of soft material have on at least one internal or external side internal axial teeth 26, for the central protuberances 18, and external axial teeth 27, for the peripheral protuberances 19. Therefore, as one can see in Figures 11 and 12, the corresponding grooves of the cylindrical surface 2 have undercuts 28, for the central grooves 16, and undercuts 29, for the peripheral grooves 17, for housing said internal and external axial teeth for holding the strip of soft material during the rotation of the wire-guiding roller.

Moreover, in Figures 11 and 12, the external edges 30 of the wire-guiding roller or drum portion are provided on the one side with a circumferential groove 31 and on the other with a corresponding circumferential seat 32, for housing a circumferential seal between two sides 30, when opposite, of two roller portions assembled contiguous to each other.

In Figures 1-14 the detachable coupling 33, made in the disc 10 between the roller or drum portion and its rotating hub 34, visible in Figures 16 and 18, occurs by means of the axial clamping of the abutment surface 35 of the protuberances 11 on corresponding surfaces of radial teeth 36 with the clamping of screws 37, visible in Figures 16 and 18. Upon detachment, after removing the screws, the radial teeth, after a short rotation of the disc 10 with respect to the rotating hub 34, pass through the radial openings 38 in the disc 10 of the roller or drum portion, so as to extract the roller or drum portion without disassembling the rotating hub 34 from the pin 39, supported at the two ends, or 40 supported in an overhanging way.

In Figure 15 one can see a complete wire-guiding roller 41, supported at the pin 39 ends, and in Figure 16 one can see its axial section in which eight roller portions 1 can be noticed. Therefore, in Figure 17 one can see a complete wire-guiding roller 42, supported with a pin 40 in an overhanging way, and in Figure 18 one can see its axial section in which four roller portions 1 can be noticed.

In the assembly of a composable wire-guiding roller or drum, as described above, an overhanging pin 40 or a pin supported at both ends 39 is provided with rotation members with rolling bearings 43, to allow the rotation of each hub 34 on the pin, and seals 44 to avoid that the cutting cooling liquid penetrates the bearings 43 damaging them. The hub 34 is thus made rotating on the pin and, in correspondence of the teeth 36, the protuberances 11 are drawn near, centred on the hub 34 by means of the centering surface 13, and tightened with screws 37 on the abutment surface 35. On the external surface 2 of the roller or drum portion 14 the strip 3 is housed, of soft material with central 8 and end grooves 9 inserting the internal 18 and end housing protuberances 19 into the suitable circumferential grooves 16 and 17 of the external cylindrical surface with the teeth 26 and 27 in the corresponding undercuts 28 and 29. The ends 4 and 5 of the strip 3 of soft material are locked with a locking element 6 fastened to the housing position 15. The ends 4 and 5, as they are provided with lips 21, are kept adherent to the external cylindrical surface 2 of the roller or drum portion due to the pressure of the locking element 6.

During maintenance: when only some internal grooves of one or more wire-guiding roller portions 1 have worn out, with the described composable roller, the roller portions are. disassembled from the respective rotating hubs 34 removing the screws 37 and taking off the roller portions in sequence, from the most external to the most internal to be disassembled for maintenance, with the passage of the teeth 36 within the openings 38 in the discs 10, to intervene more easily on the locking element 6, taking it from its housing position 15 and detaching the worn-out strip 3 to replace it with an intact one. This operation can be made with the multi-wire cutting machine off, because it requires a minimum time to replace the coating strip of soft material, or in a second moment, but assembling roller or drum portions 14 already coated with an own strip 3 of soft material, to replace the disassembled one or ones, thus having an even more shorter time with the machine off. Maintenance costs, both operating directly with the machine off and assembling as a replacement roller portions with the coating strip of soft material, are maintained low due to the adherence realized by the strip with the protuberances and grooves provided with the undercuts 28 and 29, in which the teeth 26 and 27 of the protuberances 18 and 19 are anchored, and for the security of keeping the ends 4 and 5 of the strip 3 adherent to the external cylindrical surface 2.

Therefore, the advantages that can be pointed out in the present invention are: the modular construction of a roller or drum for guiding diamond wire rings into machines for the multi-wire cutting of blocks of stone allows to provide a suitable number of roller sections and to assemble them in pairs, in sets of three or even more without then having to, after the possible disassembly, be obliged to reassemble them in the same sequence, that is to say, the sections are made interchangeable with respect to each other. The Figures show an embodiment with four sections, with the connection of the supporting pin overhanging with respect to the structure of the machine, and an embodiment with eight sections, with the connection of the supporting pin on both ends to the structure of the machine, as an example only, but the above-mentioned modularity allows for maximum freedom in the making of the wire-guiding roller according to the designer's needs.

The drawbacks to which reference is made in the prior art will no longer be an insurmountable problem, nor will involve high costs, using a wire-guiding roller or drum of diamond wires as described above. In fact, due to high wear in a section of the roller, the latter can be disassembled, disassembling from the machine the roller or drum portion 1 corresponding to the involved roller section, disassembling the roller portions preceding the involved one and replaced by a roller portion with the new strip of soft material 3 in a very rapid way with respect to the prior art. In the same moment or afterwards being able to carry out the maintenance, that is to say, the replacement of the strip, also directly in the working place of the multi-wire cutting machine. The purchase and preservation cost of the replacement for maintenance will certainly be very low, considering that the hubs 34 and the roller portions 14 are re-used replacing only the strip of the coating of soft material and the coating 7 of the locking element 5 of the lips 21 of the strip 3. Considering the small bulk of the locking element 6, it can be kept in store in several specimens already coated in the soft material 7, thus making the replacement of the worn-out strips more rapid and therefore obtaining reduced machine stops.

Moreover, the arrangement of a limited number of wires, in the grooves 8 or 9 of the coating strip 3 of the roller portion of a single section, allows to significantly reduce the wear that occurs in the contact between the wires and the grooves, because the reciprocal sliding is lesser and the roller portions of different contiguous roller sections can rotate at speeds also slightly different from each other, in such a way as to mediate their speed according to the wires that rest on the section. The observation of the condition of limited sliding between contiguous wires allows, then, to point out that the maximum advantage is to reduce the number of wires that rest on a single section, with the evident limit, however, that a greater number of sections into which the wire-guiding roller or drum is divided generates a greater construction cost, due to the greater number of hubs, bearings, screws and seals to be used, and a greater maintenance cost due to the greater work of disassembly and assembly of the sections.

Obviously, to an above-described roller or drum, for guiding the diamond wires in multi-wire machines for cutting natural or artificial stone in blocks, a person skilled in the art, in order to meet specific and contingent needs, may make several changes, all included within the protection scope of the present invention as defined by the following claims. Therefore, although less conveniently, the members provided for the decomposition, between the disc 10 and the rotating hub 34, can have a shape different from what has been shown but such as to provide the same functionality and comfort of use.

## Claims

1. Wire-guiding roller or drum, for guiding diamond wires in multi-wire machines for cutting natural or artificial stone in blocks, comprising: rotating supporting members of the roller or drum on a supporting pin (39, 40), a coating of cured soft material provided with grooves (8, 9) for housing and guiding diamond wires closed in a ring and contiguous **characterised in that** the roller or drum is divided into at least two roller or drum sections (1) to constitute at least two roller or drum portions, for guiding a number of contiguous diamond wires in a number greater than two for each roller or drum portion, correspondingly each section has with the respective roller or drum portion (1) a respective hub (34) provided with rotating supporting members, associated to the supporting pin of the roller or drum of the multi-wire machine, with a rapidly detachable coupling (33) between said hub and said roller or drum portion, the coating of soft material being made up of a coating strip (3) of soft material and with grooves (8, 9) for housing the diamond wire rings, which is held in the correct position by a locking element (6) of the two contiguous ends (4, 5) in the circumferential development of the coating strip.

2. Wire-guiding roller or drum, according to claim 1, wherein the strip (3) of soft material has lips (21) in the ends (4, 5) clamped by the locking element (6).

3. Wire-guiding roller or drum, according to claim 2, wherein the locking element (6) is provided with a coating,(7) of soft material with grooves (8, 9) for housing the wires with diamond inserts.

4. Wire-guiding roller or drum, according to claim 1, wherein the coating strip (3) is provided with central (18) and peripheral protuberances (19) in their turn the central ones being provided with internal axial teeth (26) and the peripheral ones with external axial teeth (27) that are housed in corresponding central (16) and peripheral grooves (17), with corresponding undercuts (28 and 29), present in the external cylindrical surface (2) of the roller portion (14).

5. Wire-guiding roller or drum, according to claim 1, wherein the detachable coupling (33), between a disc (10) and a corresponding rotating hub (34), comprises radial protuberances (11) between radial openings (38) in the disc, the protuberances are provided with holes (12) for screws of connection of the protuberances with radial teeth (36) present on said rotating hub, the clamping occurs on the abutment surface (35) and the centering of the disc of the roller portion (14), on the centering surface (13) of said protuberances.

6. Wire-guiding roller or drum, according to claim 1, wherein the supporting pin (40) of the roller or drum sections (1) or portions is supported in an overhanging way.

7. Wire-guiding roller or drum, according to claim 1, wherein the supporting pin (39) of the roller or drum sections (1) or portions is supported on both ends.

## Patentansprüche

1. Drahtführungswalze oder -trommel zur Führung von Diamantdrähten in Multidrahtmaschinen zum Schneiden von Blöcken aus natürlichem oder künstlichem Stein, umfassend: rotierende Lagerelemente der Walze oder Trommel auf einem Lagerzapfen (39, 40), eine mit Nuten (8, 9) versehene Beschichtung aus gehärtetem weichem Material zur Aufnahme und Führung von Diamantdrähten, welche zu einem Ring geschlossen und nahe beieinander liegend sind, **dadurch gekennzeichnet, dass** die Walze oder Trommel in mindestens zwei Walzen- oder Trommelabschnitte (1) unterteilt ist, um mindestens zwei Walzen- oder Trommelbereiche zur Führung einer Anzahl von nahe beieinander liegenden Diamantdrähten zu bilden, wobei die Anzahl für jeden Walzen- oder Trommelbereich größer als zwei ist, wobei entsprechend jeder Abschnitt mit dem jeweiligen Walzen- oder Trommelbereich (1) eine jeweilige Nabe (34) aufweist, welche mit rotierenden Lagerelementen versehen ist, die dem Lagerzapfen der Walze oder Trommel der Multidrahtmaschine zugeordnet sind, mit einer schnell lösbaren Kupplung (33) zwischen der Nabe und dem Walzen- oder Trommelbereich, wobei die Beschichtung aus weichem Material aus einem Beschichtungsstreifen (3) aus weichem Material und mit Nuten (8, 9) für die Aufnahme der Diamantdrahtringe besteht, welcher durch ein Verschlusselement (6) für die beiden aneinander angrenzenden Enden (4, 5) in der Umfangsausbildung des Beschichtungsstreifens in der richtigen Position gehalten wird.

2. Drahtführungswalze oder -trommel nach Anspruch 1, wobei der Streifen (3) aus weichem Material an den Enden (4, 5) Lippen (21) aufweist, welche durch das Verschlusselement (6) festgeklemmt werden.

3. Drahtführungswalze oder -trommel nach Anspruch 2, wobei das Verschlusselement (6) mit einer Beschichtung (7) aus weichem Material mit Nuten (8, 9) für die Aufnahme der Drähte mit Diamanteinsätzen versehen ist.

4. Drahtführungswalze oder -trommel nach Anspruch 1, wobei der Beschichtungsstreifen (3) mit zentralen (18) und peripheren Protuberanzen (19) versehen ist, wobei wiederum die zentralen Protuberanzen mit inneren axialen Zähnen (26) und die peripheren Protuberanzen mit äußeren axialen Zähnen (27) versehen sind, die in entsprechenden zentralen (16) und peripheren Nuten (17) mit entsprechenden Hinterschnitten (28, 29) aufgenommen werden, welche sich in der äußeren zylindrischen Fläche (2) des Walzenbereichs (14) befinden.

5. Drahtführungswalze oder -trommel nach Anspruch 1, wobei die lösbare Kupplung (33) zwischen einer Scheibe (10) und einer entsprechenden rotierenden Nabe (34) radiale Protuberanzen (11) zwischen radialen Öffnungen (38) in der Scheibe umfasst, wobei die Protuberanzen mit Löchern (12) für Schrauben für die Verbindung der Protuberanzen mit an der rotierenden Nabe vorhandenen radialen Zähnen (36) versehen sind, wobei das Festklemmen an der Anlagefläche (35) und das Zentrieren der Scheibe des Walzenbereichs (14) an der Zentrierfläche (13) der Protuberanzen erfolgt.

6. Drahtführungswalze oder -trommel nach Anspruch 1, wobei der Lagerzapfen (40) der Walzen- oder Trommelabschnitte (1) oder -bereiche überhängend gelagert ist.

7. Drahtführungswalze oder -trommel nach Anspruch 1, wobei der Lagerzapfen (39) der Walzen- oder Trommelabschnitte (1) oder -bereiche an beiden Enden gelagert ist.

## Revendications

1. Rouleau ou tambour de guidage de fil, pour guider des fils diamantés dans des machines multi-fils pour la découpe de pierre naturelle ou artificielle en blocs, comprenant : des éléments de support rotatifs du rouleau ou du tambour sur une broche de support (39, 40), un revêtement de matériau souple durci prévu avec des rainures (8, 9) pour loger et guider les fils diamantés fermés en anneau et contigus ; **caractérisé en ce que** le rouleau ou le tambour est divisé en au moins deux sections de rouleau ou de tambour (1) pour constituer au moins deux parties de rouleau ou de tambour, afin de guider un certain nombre de fils diamantés contigus en un nombre supérieur à deux pour chaque partie de rouleau ou tambour, de manière correspondante, chaque section a, avec la partie de rouleau ou de tambour (1) respective, un moyeu (34) respectif prévu avec des éléments de support rotatifs, associés à la broche de support du rouleau ou du tambour de la machine multi-fils, avec un couplage à détachement rapide (33) entre ledit moyeu et ladite partie de rouleau ou de tambour, le revêtement de matériau souple étant composé d'une bande de revêtement (3) de matériau souple et avec des rainures (8, 9) pour loger les anneaux de fils diamantés, qui est maintenu dans la position correcte par un élément de blocage (6) des deux extrémités contiguës (4, 5) dans le développement circonférentiel de la bande de revêtement.

2. Rouleau ou tambour de guidage de fil selon la revendication 1, dans lequel la bande (3) de matériau souple a des lèvres (21) dans les extrémités (4, 5) bloquées par l'élément de blocage (6).

3. Rouleau ou tambour de guidage de fil selon la revendication 2, dans lequel l'élément de blocage (6) est prévu avec un revêtement (7) de matériau souple avec des rainures (8, 9) pour loger les fils avec des inserts diamantés.

4. Rouleau ou tambour de guidage de fil selon la revendication 1, dans lequel la bande de revêtement (3) est prévue avec des protubérances centrales (18) et périphériques (19), à leur tour, les protubérances centrales étant prévues avec des dents axiales internes (26) et les protubérances périphériques avec des dents axiales externes (27) qui sont logées dans les rainures centrales (16) et périphériques (17) correspondantes, avec des dégagements correspondants (28 et 29) présents dans la surface cylindrique externe (2) de la partie de rouleau (14).

5. Rouleau ou tambour de guidage de fil selon la revendication 1, dans lequel le couplage détachable (33), entre un disque (10) et un moyeu rotatif (34) correspondant, comprend des protubérances radiales (11) entre des ouvertures radiales (38) dans le disque, les protubérances sont prévues avec des trous (12) pour des vis de raccordement des protubérances avec des dents radiales (36) présentes sur le moyeu rotatif, le blocage a lieu sur la surface de butée (35) et le centrage du disque de la partie de rouleau (14), sur la surface de centrage (13) des protubérances.

6. Rouleau ou tambour de guidage de fil selon la revendication 1, dans lequel la broche de support (40) des sections de rouleau ou de tambour (1) ou des parties, est supportée en surplomb.

7. Rouleau ou tambour de guidage de fil selon la revendication 1, dans lequel la broche de support (39) des sections de rouleau ou de tambour (1) ou des parties est supportée sur les deux extrémités.
